# EUROPEAN PATENT APPLICATION

(11) **EP 1 959 647 A1**
(43) Date of publication of application: **20.08.2008**
(21) Application number: 07250631.4
(22) Date of filing: 15.02.2007
(51) Int. Cl.: H04M 1/02, H04M 1/725

(54) **Wireless communication system**

(71) Applicant: Chen, Wei-Ming, Chung Li City (TW); Infinite Square Technology Inc., Taoyuan County 325 (TW)
(72) Inventor: Chen, Wei-Ming, Chung Li City (TW); Yu, Yi-Cheng, Taoyuan Hsien (TW); Huang, Chih-Tao, Ping Chen City (TW)
(74) Representative: Alexander, Thomas Bruce

(57) **Abstract**

A wireless communication device includes an RF module, an audio-processing module (22) , a receiving/transmitting module (23) and a housing. The RF module (21) connected wireless with a notebook computer (28) is used for receiving/transmitting an RF data signal and converting the RF data signal into a respective digital audio signal. The audio-processing module is used to perform bi-directional conversion between digital audio signals and analog audio signals. The receiving/transmitting module is used to input or output the analog audio signals. The housing is used to integrate structurally the RF module, the audio-processing module and the receiving/transmitting module so as to appear the wireless communication device a size as a typical computer memory cartridge that can be accommodated inside a memory extension slot of the notebook computer.

## Description

### BACKGROUND OF THE INVENTION

### (1) Field of the Invention

The invention relates to a wireless communication device, and more particularly to the device that is applicable to the internet voice communication system and that can be stored in the memory extension slot of the notebook computer.

### (2) Description of the Prior Art

As well known in the art, the technique of voice over internet protocol (VoIP), widely used in network voice communication, transmits audio data through the internet by encoding, compressing and packing analog voice or image signals into a data packet. Unlike the VoIP gateways and the VoIP network phones, the software network phones, such as the Skype, the MSN messenger, the Yahoo messenger and the ICQ, become the mainstream network phoning tools for their low communication rates. In application of the aforesaid software network phones, a common instant messenger software is the only requirement to both parties at distant computer ends. Particularly, the software network may connect with the public switched telephone network (PSTN) and thus make possible the communication between the computer, the domestic phone set, the cellular phone and the oversea phone.

Among various software networks, the Skype further includes a peer-to-peer connection technique that can bypass the verification of the server or the firewall so as to process directly mutual data transmission between the connecting computers. Upon such an arrangement, the inherent communication lag in networking can be reduced to a minimum and thus a quality network communication can be ensured.

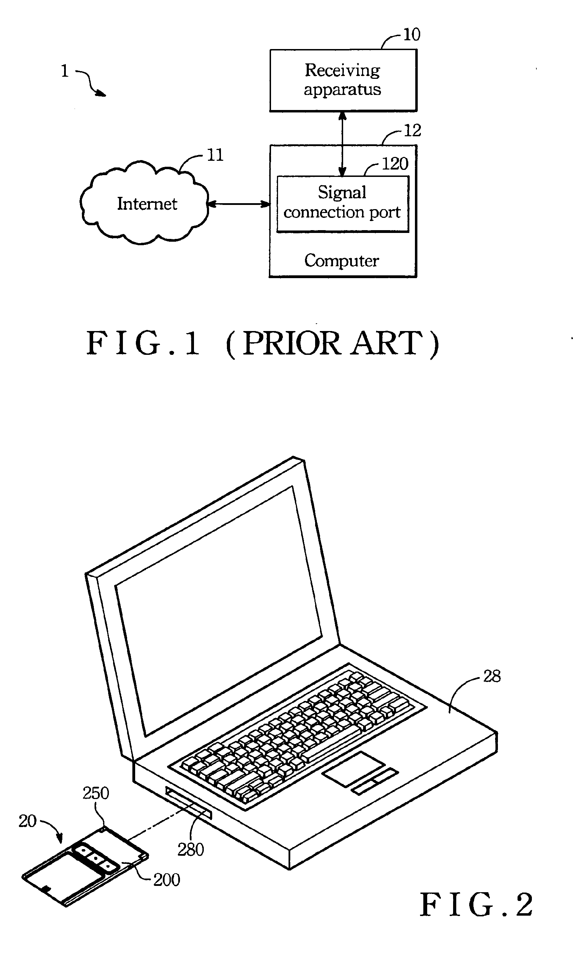

Referring now to FIG.1, a schematic view of a typical phone-receiving system of software network 1 is shown. In the system 1, a computer 12 is connected with an Internet 11. Before the computer 12 executes a real-time communication software to initiate a voice communication over the network, a receiving apparatus 10 need to be connected to a signal connection port 120 of the computer 12.

Generally, the receiving apparatus 10 is an audio headset, and the signal connection port 120 is a built-in hole for receiving an earphone or a microphone in the computer 12. Except for the audio headset, the receiving apparatus 10 can also be a USB portable phone set, while the signal connection port 120 is one of the USB slots in the computer 12. Conventionally, the USB portable phone set, resembled to a general phone set but connected to the USB slot of the computer 12, can be seen as a kind of sound cards to override the built-in audio device of the computer 12. The digital audio packet signals transmitted from the USB slot are converted into respective analog audio signals at the USB portable phone set, and then the analog audio signals can be broadcasted through a handset of the USB portable phone set.

Nowadays, wide-spread cable network has been constructed in modem countries. Also, with the help of thousands access points from numerous wireless local area networks in major metropolis, a portable notebook computer can cruise arbitrarily the network, either wireless or cable-ly, and can utilize conveniently the network phone as well. However, to apply the network phone at the notebook computer, an optional receiving apparatus 10, either the audio headset or the USB portable phone set, is required, but such an additional part degrades the portability of the notebook computer.

### SUMMARY OF THE INVENTION

Accordingly, it is an object of the present invention to provide a wireless communication device that can be accommodated inside a memory extension slot of a notebook computer so as to waive the portability problem in carrying a conventional receiving device.

It is another object of the present invention to provide a wireless communication device that can connect wireless with the notebook computer so as to enhance the convenience of the VoIP.

In accordance with the present invention, the wireless communication device includes a radio frequency (RF) module, an audio-processing module, a receiving/transmitting module and a housing. The RF module connected wireless with a notebook computer is used for receiving/transmitting an RF data signal and converting the RF data signal into a respective digital audio signal. The audio-processing module is used to perform bi-directional conversion between digital audio signals and analog audio signals. The receiving/transmitting module is used to input or output the analog audio signals. The housing is used to integrate structurally the RF module, the audio-processing module and the receiving/transmitting module so as to appear the wireless communication device a size as a typical computer memory cartridge that can be accommodated, or say storable, inside a memory extension slot of the notebook computer.

The aforesaid notebook computer connecting wireless with an internet can transform an RF data signal into a network audio packet signal for further VoIP operation. The RF data signal ought to meet a transmission standard of wireless personal area network (WPAN) such as a Bluetooth transmission standard or an ultra-wideband (UWB) transmission standard.

To have the notebook computer meeting a specific wireless transmission standard, another aspect of the wireless communication device according to the present invention includes a housing, a wireless supportive module, an RF module, an audio-processing module and a receiving/transmitting module. The housing, introduced to present the wireless communication device a size as a typical computer memory cartridge that can be accommodated inside a memory extension slot of a notebook computer, further has a receiving slot for nesting the wireless supportive module. The wireless supportive module is used to engage with a connection port of the notebook computer. By providing the wireless supportive module, the notebook computer can receive or transmit RF data signals. The RF module located inside the housing is used to receive or transmit the RF data signal and is also used to perform bi-directional conversions between the digital audio signals and the analog audio signals. The receiving/transmitting module mounted inside the housing is used to input or output the analog audio signals.

In the present invention, the size of the housing is resembled to a PC card (or say, PCMCIA card), a PCI express card/34 or a PCI express card /54.

In the present invention, the wireless communication device further includes a battery and a charge loop. The battery can be the power source of the wireless communication device, while the charge loop is used to recharge the battery. The charge loop has a charge interface for engaging with a connection port of a memory extension slot of the notebook computer.

By providing the wireless communication device of the present invention to wireless connect with the notebook computer, the VoIP operation can be more conveniently. Further, the present wireless communication device can be accommodated inside the memory extension slot of the notebook computer, so that a portability merit over the conventional design can be obtained. Also, by providing the charge loop and the battery inside the wireless communication device, the recharging of the wireless communication device can be easily processed inside the notebook computer.

All these objects are achieved by the wireless communication device described below.

### BRIEF DESCRIPTION OF THE DRAWINGS

The present invention will now be specified with reference to its preferred embodiment illustrated in the drawings, in which:

FIG.1 is a schematic view showing a typical phone-receiving system of software network;

FIG.2 is a perspective view showing a wireless communication device and a notebook computer in accordance with the present invention;

FIG.3 is a block diagram of a first embodiment of the wireless communication device in accordance with the present invention;

FIG.4A is a perspective view of the first embodiment of the wireless communication device of FIG.3;

FIG.4B is another perspective view of FIG.4A in a stand state;

FIG.5 is a perspective view of a second embodiment of the wireless communication device in accordance with the present invention;

FIG.6 is a preferred system construction of the second embodiment of the wireless communication device of FIG.5; and

FIG.7 is a block diagram of a third embodiment of the wireless communication device in accordance with the present invention.

### DESCRIPTION OF THE PREFERRED EMBODIMENT

The invention disclosed herein is directed to a wireless communication module. In the following description, numerous details are set forth in order to provide a thorough understanding of the present invention. It will be appreciated by one skilled in the art that variations of these specific details are possible while still achieving the results of the present invention. In other instance, well-known components are not described in detail in order not to unnecessarily obscure the present invention.

Referring now to FIG.2, a look of a wireless communication device of the present invention and a notebook computer is present. As shown, the wireless communication device 20 includes a housing 200 that has a size comparable to a PC card (i.e. PCMCIA card), a PCI express card/34 or a PCI express card/54. The housing 200 can be accommodated into a memory extension slot 280 of the notebook computer 28.

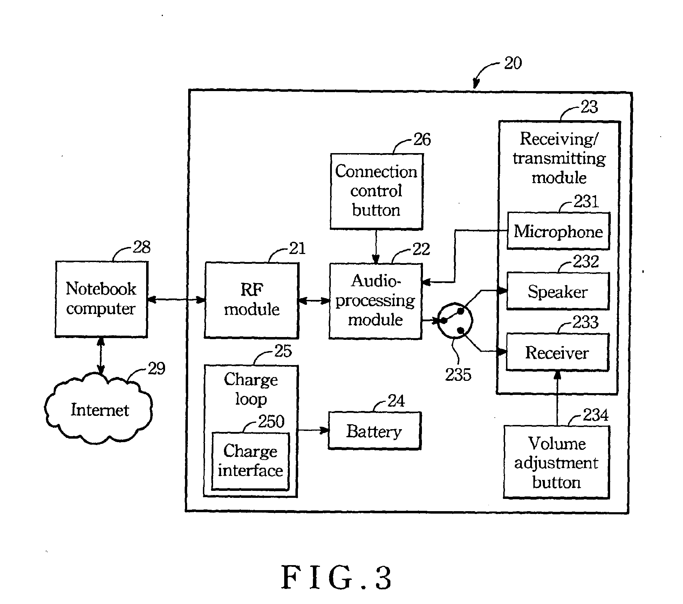

Referring now to FIG.3, a system construction of a first embodiment of the wireless communication device is shown. The wireless communication device 20 includes an RF module 21, an audio-processing module 22 and a receiving/transmitting module 23. All of these three modules 21-23 are mounted into or on the housing 200. The RF module 21 is used for wireless connecting with the notebook computer 28 and also for receiving/transmitting RF data signals. The receiving/transmitting module 23 is used for input/output analog audio signals.

After the receiving/transmitting module 23 inputs an analog audio signal, the audio-processing module 22 converts the analog audio signal into a respective digital audio signal. Then, the RF module 21 converts the digital audio signal into a respective wireless data signal to be transmitted to the notebook computer 28. On the other hand, as the RF module 21 receives a wireless data signal from the notebook computer 28, the module 21 converts immediately the wireless data signal into a respective digital audio signal and forwards the digital audio signal to the audio-processing module 22. The audio-processing module 22 further converts the digital audio signal into a respective analog audio signal and then forwards the analog audio signal to the receiving/transmitting module 23 for further broadcasting.

The notebook computer 28 connected wireless to an appropriate internet 29 can transform RF data signals into respective network audio packet signals for processing network voice communication. The aforesaid wireless data signals should meet a transmission standard of the WPAN, such as a Bluetooth transmission standard or a UWB transmission standard.

The receiving/transmitting module further includes a receiver 233 for transmitting analog audio signals and a microphone 231 for receiving analog audio signals. The wireless communication device 20 can further include a volume adjustment button 234 for controlling the output volume of the analog audio signals. In the first embodiment as shown in FIG.3, the receiving/transmitting module 23 can further include a speaker 232 for amplifying the outgoing analog audio signals and an audio switch button 235 for determining from where, either the receiver 233 or the speaker 232, the analog audio signals are output. Further, the receiving/transmitting module 23 can further include a connection control button 26 for controlling the ON/OFF of the wireless communication device 20.

The wireless communication device 20 can further include a battery 24 and a charge loop 25. The battery 24 is used to power the wireless communication device 20, and the charge loop 25 is used to recharge the battery 24. The charge loop 25 can further has a charge interface 250 for engaging with a connection port of a memory extension slot 280 of the notebook computer 28. As shown in FIG.2, the connection port can be located inside the memory slot 280.

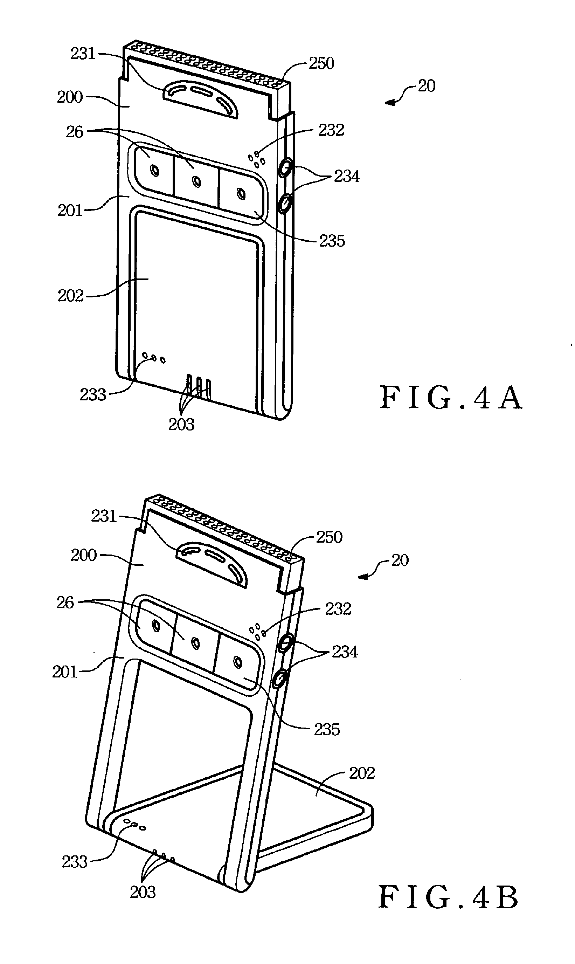

Referring now to FIG.4A and FIG.4B, perspective views of the appearance of the first embodiment of the wireless communication device 20 in accordance with the present invention are shown in different states.

The housing 200 includes a main body 201 and a stand 202 preferably pivotally engaging to the main body 201. As shown in FIG.4B, the stand 202 can be extended to have the housing 20 standing on a plane. Upon such an arrangement, the wireless communication device 20 can be hand-held to process private network voice communication, or it can stand on a table and choose the speaker 232 to broadcast analog audio signals while in a network conference. Also, the wireless communication device 20 can further include at least one status indicator 203, preferably the light-emitting diode (LED), for showing the power status or operation status of the wireless communication device 20.

In the present invention, the wireless data signals can also be video signals, i.e. the audio signals plus the imaging signals. In this aspect, by providing an image-processing chip and accompanying circuits to the RF module 21, the RF module 21 can demodulate, extract and decode the wireless data signals into respective video signals including the audio signals and the image signals. In addition, the wireless communication device 20 can include a display (not shown in the figures) for displaying the image signals.

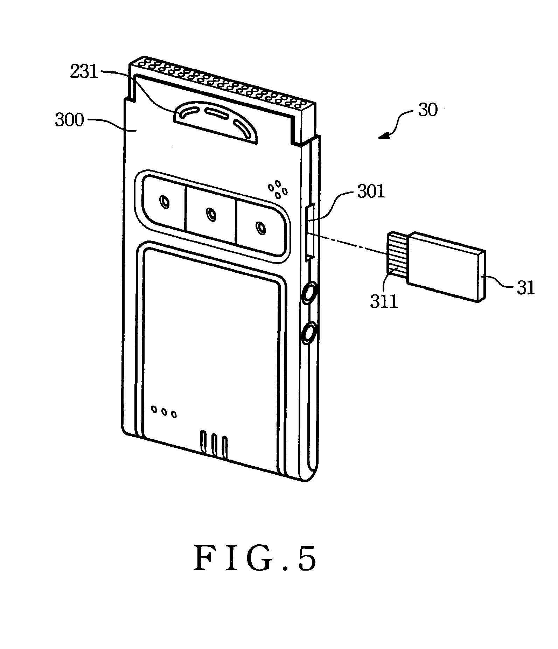

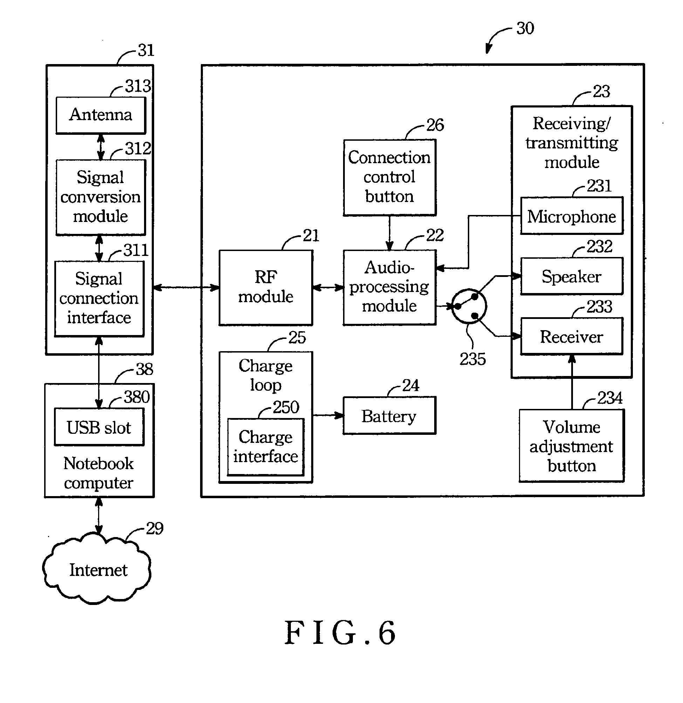

In general, not all notebook computers in the market have a short-ranged wireless communication function. To upgrade a current notebook computer without the short-ranged wireless communication function, please refer to the improvements provided in FIG. 5 and FIG.6 in accordance with the present invention.

Referring now to FIG.5, a perspective view of a second embodiment 30 of the wireless communication device in accordance with the present invention is shown. The wireless communication device 30 includes a wireless supportive module 31 and a receiving slot 301 for storing thereinside the wireless supportive module 31.

Referring now to FIG.6, a preferred system construction of the second embodiment of the wireless communication device of FIG.5 is shown. The major difference in application between the first embodiment of FIG.3 and the second embodiment of FIG.6 is that the notebook computer 38 for the second embodiment 30 does not have a built-in short-ranged wireless communication function to go with the wireless communication device shown in FIG.3. To upgrade such a notebook computer 38, the wireless supportive module 31 is provided to the wireless communication device 30 so as to make the notebook computer 38 capable of wireless connecting with the wireless communication device 30 of the present invention. As shown, the wireless supportive module 31 includes a signal connection interface 311, a signal conversion module 312 and an antenna 313. The signal connection interface 311 is used to engage with a USB slot 380 of the notebook computer 38 so as to input/output a first digital signal. The notebook computer 38 can converts the first digital signal into a network audio packet signal that can be used to process network voice communication over the internet 29. The signal conversion module 312 is used to process bi-directional conversions between the first digital signal and a respective wireless data signal. The antenna 313 for receiving/transmitting the wireless data signal is used to wireless connect with the RF module 21 of the wireless communication device 30. Detail descriptions of all other elements shown in FIG.6 are similar to those in FIG.3, and so would be omitted herein.

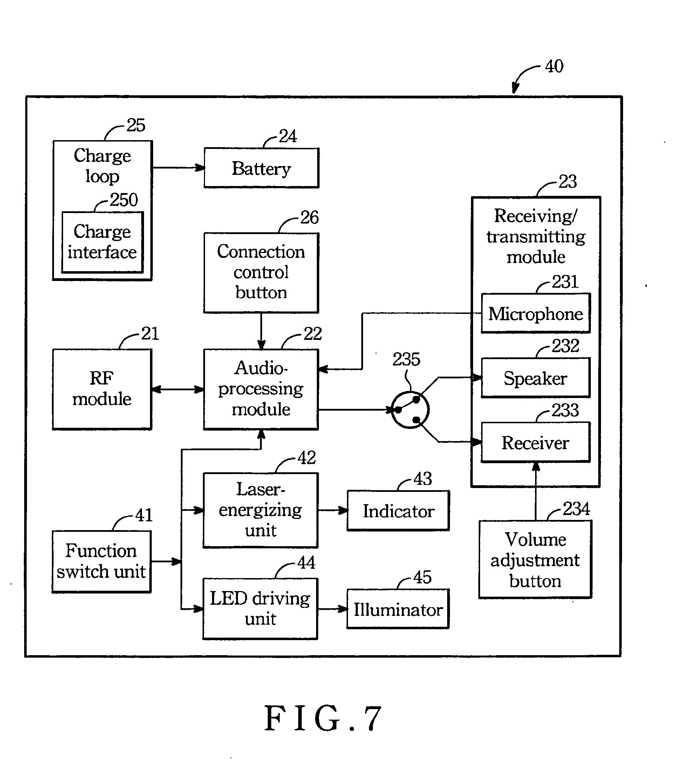

Referring now to FIG.7, a block diagram of a third embodiment 40 of the wireless communication device in accordance with the present invention is shown. The wireless communication device 40 further includes an indicator 43 and an illuminator 45. The indicator 43 can be a laser diode to emit a visible laser beam, such that the wireless communication device 40 can be used as a laser pointer. The illuminator 45 can be an LED so as to add an illumination function to the wireless communication device 40. In the present invention, a laser-energizing unit 42 can be introduced to power the indicator, while an LED driving unit 44 can be introduced to drive the illuminator 45. Also shown, a function switch unit 41 presented as a functional button of the wireless communication device 40 connects with the audio-processing module 22, the laser-energizing unit 42 and the LED-driving unit 44. By providing the function switch unit 41, the wireless communication device 40 can be switched around operations of a communication function, a laser pointer function, and an illumination function.

In the present invention, by providing the wireless communication device to wireless connect with the notebook computer, the network voice communication can be made more convenient. Equally importantly, the design of having the wireless communication device storable and rechargeable inside the memory extension slot of the notebook computer make more compact and portable the combination of the notebook computer and the wireless communication device.

While the present invention has been particularly shown and described with reference to a preferred embodiment, it will be understood by those skilled in the art that various changes in form and detail may be without departing from the spirit and scope of the present invention.

## Claims

1. A wireless communication device, comprising:
a radio frequency (RF) module for wireless connecting with a notebook computer so as to receive/transmit an RF data signal and further to perform bi-directional conversion between the RF data signal and a respective digital audio signal, the RF data signal meeting a transmission standard selected from a group of a Bluetooth transmission standard and an ultra-wideband transmission standard;
an audio-processing module for performing bi-directional conversion between the digital audio signal and a respective analog audio signal;
a receiving/transmitting module for receiving/transmitting the analog audio signal, further including a microphone and a receiver; and
a housing, integrating and mounting the RF module, the audio-processing module and the receiving/transmitting module into a size that is storable inside a memory extension slot of the notebook computer.

2. The wireless communication device according to claim 1, wherein said notebook computer connects wireless an internet and transforms said RF data signal into a network audio packet signal for further processing a network voice communication.

3. The wireless communication device according to claim 1, further including:
a battery for powering said wireless communication device; and
a charge loop for recharging the battery, further including a charge interface to engage with a connection port of said memory extension slot.

4. The wireless communication device according to claim 1, wherein said RF module further including:
an indicator for emitting a visible laser beam;
a laser-energizing unit for powering the indicator; and
a function switch unit for controlling the indicator.

5. A wireless communication device, comprising:
a housing, storable inside a memory extension slot of a notebook computer, further including a receiving slot;
a wireless supportive module, storable inside the receiving slot, further including a USB connection port for engaging with a USB slot of the notebook computer so as to have the notebook computer using the wireless supportive module to receive/transmit an RF data signal, the RF data signal meeting a transmission standard selected from a group of a Bluetooth transmission standard and an ultra-wideband transmission standard;
an RF module, mounted inside the housing, for wireless connecting with the notebook computer so as to receive/transmit the RF data signal and further to perform bi-directional conversion between the RF data signal and a respective digital audio signal;
an audio-processing module, mounted inside the housing, for performing bi-directional conversion between the digital audio signal and a respective analog audio signal; and
a receiving/transmitting module for receiving/transmitting the analog audio signal, mounted inside the housing, further including a microphone and a receiver.

6. The wireless communication device according to claim 5, further including:
a battery for powering said wireless communication device; and
a charge loop for recharging the battery, further including a charge interface to engage with a connection port of said memory extension slot.

7. The wireless communication device according to claim 5, wherein said wireless supportive unit further including:
a signal connection interface for engaging with a USB slot of said notebook computer for receiving/transmitting a first digital signal;
a signal conversion module for performing bi-directional conversion between the first digital signal and said RF data signal; and
antenna for receiving/transmitting said RF data signal.

8. The wireless communication device according to claim 7, wherein said notebook computer connects wireless an internet and transforms said first digital signal into a network audio packet signal for further processing a network voice communication.

9. The wireless communication device according to claim 5, wherein said RF module further including:
an indicator for emitting a visible laser beam;
a laser-energizing unit for powering the indicator; and
a function switch unit for controlling the indicator.
